# EUROPEAN PATENT APPLICATION

(11) **EP 1 878 345 A1**
(43) Date of publication of application: **16.01.2008**
(21) Application number: 06014562.0
(22) Date of filing: 13.07.2006
(51) Int. Cl.: A01N 43/54, A01N 37/22, A01N 25/22, A01N 25/04, A01P 13/00

(54) **Herbicidal composition**

(71) Applicant: Sygenta Participations AG., 4058 Basel (CH)
(72) Inventor: The designation of the inventor has not yet been filed
(74) Representative: Arunasalam, Velautha-Cumaran

(57) **Abstract**

Herbicidal composition in the form of an emulsifiable concentrate, which in addition to comprising emulsifiers, adjuvants and solvents, comprises
a) benzophenone O-[2,6-bis(4,6-dimethoxypyrimidin-2-yloxy)benzoyl]oxime,
b) 2-chloro-2',6'-diethyl-N-(2-propoxyethyl)acetanilide, and
c) at least one steric hindered phenol.

## Description

The present invention relates to a novel herbicidal composition in the form of an emulsifiable concentrate formulation (EC), which contains an herbicidally effective amount of 2-chloro-2',6'-diethyl-*N*-(2-propoxyethyl)acetanilide together with an herbicidally effective amount of benzophenone *O*-[2,6-bis(4,6-dimethoxypyrimidin-2-yloxy)benzoyl]oxime. The present invention relates also to the use of such composition for controlling grasses and weeds in crops of useful plants, especially in crops of rice.

In another aspect, the present invention relates also to a method of controlling undesired vegetation in crops of useful plants, which comprises allowing a herbicidally effective amount of the herbicidal composition in the form of an emulsion prepared with the emulsifiable concentrate formulation according to the invention to act where control is desired. Undesired vegetation is for example annual grasses, broad-leaved weeds and sedges.

In a further aspect, the present invention relates also to the use of a steric hindered phenol, preferably 2,6-di-tert-butyl-1-hydroxy-4-methylbenzene, for the stabilisation of benzophenone O-[2,6-bis(4,6-dimethoxypyrimidin-2-yloxy)benzoyl]oxime and 2-chloro-2',6'-diethyl-*N*-(2-propoxyethyl)acetanilide in an emulsifiable concentrate formulation. 2-chloro-2',6'-diethyl-*N*-(2-propoxyethyl)acetanilide is effective against main annual grasses, broad-leaved weeds and sedges in transplanted and seeded rice. This compound is described for example in GB 1438311 and GB 1438312.

Benzophenone O-[2,6-bis(4,6-dimethoxypyrimidin-2-yloxy)benzoyl]oxime is effective as a post-emergence herbicide, especially for controlling barnyard grass (Echinochloa spp.), blackgrass (Alopecurus myosuroides) and polygonums in rice, wheat and zoysiagrass. This compound is described for example in EP 658549B1.

Emulsifiable concentrate formulations (EC) containing these two herbicidal active ingredients are already known from Example 1 of EP1562421. However, EC formulations of these two herbicidal active ingredients are chemically not stable. In particular benzophenone O-[2,6-bis(4,6-dimethoxypyrimidin-2-yioxy)benzoyl]oxime shows a quite dramatic degradation during storage.

Therefore, the goal of the present invention is to provide an emulsifiable concentrate (EC) of 2-chloro-2',6'-diethyl-*N*-(2-propoxyethyl)acetanilide in admixture with benzophenone *O*-[2,6-bis(4,6-dimethoxypyrimidin-2-yloxy)benzoyl]oxime, which shows an improved storage stability.

Surprisingly, it has been found that degradation of benzophenone O-[2,6-bis(4,6-dimethoxypyrimidin-2-yloxy)benzoyl]oxime can be prevented by adding a specific stabilizer to the formulation. This stabilizer is chosen from the group of steric hindered phenols which are known antioxidants.

The goal of the present invention is to provide an herbicidal composition in the form of an emulsifiable concentrate, which in addition to comprising emulsifiers, adjuvants and solvents, comprises
a) benzophenone O-[2,6-bis(4,6-dimethoxypyrimidin-2-yloxy)benzoyl]oxime,
b) 2-chloro-2',6'-diethyl-*N*-(2-propoxyethyl)acetanilide, and
c) at least one steric hindered phenol.

Surprisingly, only steric hindered phenols present in said composition lead to a sensible stabilization of the emulsifiable concentrate (EC).

Suitable representatives of steric hindered phenols to be used according to the invention are for example 2,6-di-tert-butylphenol, butylated hydroxytoluene (BHT or 2,6-di-tert-butyl-1-hydroxy-4-methylbenzene), butylated hydroxyanisole (BHA or 2,6-di-tert-butyl-1-hydroxy-4-methoxybenzene), mixture of 2- and 3-tert-butyl-4-methoxyphenol, tetrakis[methyleno(3,5-di-tert-butyl-4-hydroxyhydrocinnamate)]methane, 2,2'-methylenebis-(4-methyl-6-tert-butylphenol) and N,N'-1,6-hexamethylene-bis-3-(3,5-di-tert-butyl-4-hydroxyphenyl)propionamide.

Preferred representative of the steric hindered phenol group is butylated hydroxytoluene (BHT or 2,6-di-tert-butyl-1-hydroxy-4-methylbenzene).

The emulsifiable concentrate (EC) according to the invention contains preferably, 0.1 to 20 % w/v benzophenone O-[2,6-bis(4,6-dimethoxypyrimidin-2-yloxy)benzoyl]oxime, more preferably 0.5 to 10 % w/v benzophenone O-[2,6-bis(4,6-dimethoxypyrimidin-2-yloxy)benzoyl]oxime, even more preferably 1 to 5 % w/v benzophenone O-[2,6-bis(4,6-dimethoxypyrimidin-2-yloxy)benzoyl]oxime

The emulsifiable concentrate (EC) according to the invention contains preferably, 5 to 70 % w/v 2-chloro-2',6'-diethyl-*N*-(2-propoxyethyl)acetanilide, more preferably, 10 to 50 % w/v 2-chloro-2',6'-diethyl-*N*-(2-propoxyethyl)acetanilide, even more preferably, 20 to 40 % w/v 2-chloro-2',6'-diethyl-*N*-(2-propoxyethyl)acetanilide.

The emulsifiable concentrate (EC) according to the invention contains preferably, 0.01 to 10 % w/v steric hindered phenol, more preferably 0.2 to 5 % w/v steric hindered phenol, even more preferably, 0.5 to 3 % w/v steric hindered phenol.

The steric hindered phenol can be used in admixture with at least one customary inert formulation ingredient such as for instance solvents. Solvents are for example, water insoluble solvents and polar solvents.

Examples of customary water insoluble solvents are aromatic hydrocarbon solvents like Toluol, Xylol, Cumol, mixtures of aromatic hydrocarbon solvents with a boiling range from 160 to 180°C (Solvesso 100) or from 180 to 210°C (Solvesso 150) or from 230 to 290°C (Solvesso 200), aliphatic or cycloaliphatic hydrocarbon solvents (Exxsol D80, Exxsol D100, Exxsol D120, Isopar H und Isopar V), fatty alcohol acetate solvents (Exxate 700, Exxate 1000), isobornyl acetate, benzyl acetate, lower alkyl ester of di-carboxylic acid like Maleic acid, Fumaric acid, Succinic acid, lower alkyl esters of a mixture of Succinic, Glutaric and Adipic acid (Solvent DBE), esters of Benzoic acid like benzyl benzoate, methyl benzoate und dipropylenglycol dibenzoate, as well as lower alkyl esters of higher fatty acids like C₈-C₁₀-fatty acid methyl ester and C₁₆-C₁₈- fatty acid methyl ester.

The emulsifiable concentrate (EC) according to the invention contains preferably 3 to 80 % w/v water insoluble solvents, more preferably 5 to 50 % w/v water insoluble solvents, even more preferably 5 to 30 % w/v water insoluble solvents.

Examples of customary polar solvents are N-methyl-pyrrolidone, N-ethyl-pyrrolidone, other N-alkyl-pyrrolidones, gamma-butyrolactone, acetophenone (methyl phenylketone), cyclohexanone, dimethyl formamide, dimethyl acetamide, fatty acid dimethylamides like Hallcomid M-8-10, dimethylamides of organic acids which contain an aromatic ring like benzoic acid dimethylamide, lower alkyl esters of lactic acid.

The emulsifiable concentrate (EC) according to the invention contains preferably 3 to 50 % w/v polar solvents, more preferably 5 to 40 % w/v polar solvents, even more preferably 5 to 30 % w/v polar solvents.

The composition according to the invention usually contains emulsifiers. Examples of emulsifiers are non-ionic surfactants like castor oil ethoxylates, alcohol ethoxylates, tristyrylphenol ethoxylates, ethylenoxide-propyleneoxid block copolymers, ethoxylated sorbitan fatty acid esters or mixtures thereof, as well as mixtures with anionic surfactants like the calcium salt of dodecylbenzenesulfonic acid or the sodium salt of sulfosuccinic acid dialkyl esters.

The emulsifiable concentrate (EC) according to the invention contains preferably 2 to 60 % w/v emulsifiers, more preferably 5 to 50 % w/v emulsifiers, even more preferably 10 to 40 % w/v emulsifiers.

The composition according to the invention can be prepared with safeners or derivates thereof like acid form or agronomic acceptable forms. 4,6-dichloro-2-phenylpyrimidine is the preferred safener for the composition according to the invention. 4,6-dichloro-2-phenylpyrimidine [Fenclorim (332)] is described, for example, in "The e-Pesticide Manual", version 3.1, 13th Edition, Ed. CDC Tomlin, British Crop Protection Council, 2004-2005.

The emulsifiable concentrate (EC) according to the invention contains preferably, 0,3 to 40 % w/v 4,6-dichloro-2-phenylpyrimidine, more preferably, 10 to 50 % w/v 4,6-dichloro-2-phenylpyrimidine, even more preferably, 20 to 40 % w/v 4,6-dichloro-2-phenylpyrimidine.

The composition according to the invention may also contain adjuvants, which can increase the efficacy of said composition. For the present invention, suitable adjuvants are, for example, described in EP-A-1062217. These adjuvants are for example non-ionic surfactants, mixtures of nonionic surfactants, mixtures of anionic surfactants with non-ionic surfactants, cationic surfactant, organo-silicon surfactants, mineral oil derivatives with or without surfactants, vegetable oils derivatives with or without surfactants, alkylated derivatives of oils of vegetable origin with or without surfactants, fishes oils with or without surfactant as well as alkylated derivatives thereof with or without surfactants, naturally occurring higher fatty acids, preferably having from 2 to 28 carbon atoms, and alkyl ester derivatives thereof, organic acids containing an aromatic ring system and alkyl derivatives thereof. Mixtures of individual adjuvants with one another and combined with organic solvents may lead to the activity being further increased.

Non-ionic surfactants suitable as adjuvants include, for example, polyglycol ether derivatives of aliphatic or cycloaliphatic alcohols, of saturated or unsaturated fatty acids and alkylphenols, preferably that can contain from 3 to 30 glycol ether groups and from 8 to 20 carbon atoms in the (aliphatic) hydrocarbon radical and from 6 to 18 carbon atoms in the alkyl radical of the alkylphenols.

Further suitable non-ionic surfactants are the polyethylene oxide adducts of polypropylene glycol, ethylenediaminopolypropylene glycol and alkyl polypropylene glycol having preferably from 1 to 10 carbon atoms in the alkyl chain, which adducts contain preferably from 10 to 100 ethylene glycol ether groups and from 20 to 200 propylene glycol ether groups. The said compounds usually contain from 0.1 to 5 ethylene glycol units per propylene glycol unit.

There may also be mentioned, as further examples of non-ionic surfactants, nonylphenol polyethoxyethanols and octylphenol polyethoxyethanol, castor oil polyglycol ethers, tributylphenoxypolyethoxy ethanol or polyethylene glycol.

Fatty acid esters of polyoxyethylenesorbitan, e.g. polyoxyethylenesorbitan trioleate, are also suitable.

Preferred anionic surfactants are especially alkyl sulfates, alkyl sulfonates, alkylaryl sulfonates, alkylated phosphoric acids, and ethoxylated derivatives thereof. The alkyl radicals usually contain from 8 to 24 carbon atoms.

Oil additives may be used. They are either of mineral or natural origin. The natural oils can in addition be of animal or vegetable origin. Of the animal oils preference is given especially to derivatives of beef tallow, but fish oils (e.g. sardine oil) and derivatives thereof are also used.

Vegetable oils are mostly seed oils of varied origin. Examples of vegetable oils used especially that may be mentioned include coconut oil, rapeseed oil and sunflower oil and derivatives thereof.

In the composition according to the invention, the concentrations of oil additive are generally from 1 to 20 %, preferably from 5 to 20 %.

Preferred oil additives in the composition according to the invention comprise an oil of vegetable origin, for example rapeseed oil or sunflower oil, alkyl esters of oils of vegetable origin, for example methyl derivatives, or mineral oils.

Especially preferred oil additives comprise alkyl esters of higher fatty acids (C₈-C₂₂), especially methyl derivatives of C₁₂-C₁₈ fatty acids, for example the methyl esters of lauric acid, palmitic acid and oleic acid. Those esters are known as methyl laurate (CAS-111-82-0), methyl palmitate (CAS-112-39-0) and methyl oleate (CAS-112-62-9).

Surfactants, oils, especially vegetable oils, derivatives thereof, such as alkylated fatty acids and mixtures thereof, for example with preferably anionic surfactants, such as alkylated phosphoric acids, alkyl sulfates and alkylaryl sulfonates and also higher fatty acids, that are customary in formulation and adjuvant technology and that can also be used in the compositions according to the invention and in spray tank solutions thereof, are described, *inter alia,* in "McCutcheon's Detergents and Emulsifiers Annual" MC Publishing Corp., Ridgewood New Jersey, 1998, Stache, H., "Tensid-Taschenbuch", Carl Hanser Verlag, Munich/Vienna. 1990, M. and J. Ash, "Encyclopedia of Surfactants", Vol I-IV, Chemical Publishing Co., New York, 1981-89, G. Kapusta, "A Compendium of Herbicide Adjuvants". Southern Illinois Univ. , 1998, L. Thomson Harvey, "A Guide to Agricultural Spray Adjuvants Used in the United States", Thomson Pubns., 1992.
The preparation of the emulsifiable concentrates (EC) according to the invention is substantially carried out by methods known by a person skilled in the art.

### Examples

The solid active ingredient benzophenone (*O*-[2,6-bis(4,6-dimethoxypyrimidin-2-yloxy)benzoyl]oxime) and the stabilizer are charged into a dry and clean vessel. The first solvent (methyl-phenylketone) is added at a temperature between 20 and 30°C and the mixture is stirred until the solids are completely dissolved. The emulsifiers are added (dodecyl-benzene sulfonic acid Calcium salt linear, fatty alcohol ethoxylate and propylene-oxide/ethylene oxide copolymer), and then the liquid active ingredient (2-chloro-2',6'-diethyl-*N*-(2-propoxyethyl)acetanilide) and the second solvent (mixture of heavy aromatic hydrocarbons) are added. After an additional agitation time of about 30 minutes a homogeneous solution is obtained.

Emulsifiable concentrate N° 1 (EC 1) is prepared as described with 2,6-di-tert-butyl-1-hydroxy-4-methylbenzene as stabilizer.

Emulsifiable concentrate N° 2 (EC 2) is prepared as described with expoxidised soybean oil as stabilizer.

Emulsifiable concentrate N° 3 (EC 3) is prepared as described with no stabilizer.

**Table 1**

| Comparison between EC 1, EC 2 and EC3 concerning the stability of benzophenone O-[2,6-bis(4,6-dimethoxypyrimidin-2-yloxy)benzoyl]oxime in said ECs after a storage of 2 weeks at 54°C. | | | |
|---|---|---|---|
| | **EC 1** | **EC 2** | **EC 3** |
| | [g] | [g] | [g] |
| benzophenone O-[2,6-bis(4,6-dimethoxypyrimidin-2-yloxy)benzoyl]oxime | 20 | 20 | 20 |
| 2-chloro-2',6'-diethyl-*N*-(2-propoxyethyl)acetanilide | 300 | 300 | 300 |
| Methyl-phenylketone | 150 | 150 | 150 |
| Linear Ca-salt of dodecyl benzene sulfonic acid | 25 | 25 | 25 |
| Fatty alcohol ethoxylate | 25 | 25 | 25 |
| Propylene-oxide / ethylene-oxide copolymer | 400 | 400 | 400 |
| 2,6-Di-tert-Butyl-1-Hydroxy-4-Methylbenzene | 10 | - | - |
| Expoxidised soybean oil | - | 10 | - |
| Mixture of heavy aromatic hydrocarbons | Balance up to 1 litre | Balance up to 1 litre | Balance up to 1litre |
| | | | |
| Total | 1 litre | 1 litre | 1 litre |
| | | | |
| Loss in benzophenone O-[2,6-bis(4,6-dimethoxypyrimidin-2-yloxy)benzoylloxime (in %) | **1.0** | **28.0** | **6.1** |

**Table 2**

| Comparison between EC 1, EC 2 and EC 3 concerning the stability of benzophenone O-[2,6-bis(4,6-dimethoxypyrimidin-2-yloxy)benzoyl]oxime in said ECs after a storage of 4 weeks at 50°C. | | | |
|---|---|---|---|
| | **EC 1** | **EC 2** | **EC 3** |
| | [g] | [g] | [g] |
| benzophenone O-[2,6-bis(4,6-dimethoxypyrimidin-2-yloxy)benzoyl]oxime | 20 | 20 | 20 |
| 2-chloro-2',6'-diethyl-*N*-(2-propoxyethyl)acetanilide | 300 | 300 | 300 |
| Methyl-phenylketone | 150 | 150 | 150 |
| Linear Calcium salt of dodecyl benzene sulfonic acid | 25 | 25 | 25 |
| Fatty alcohol ethoxylate | 25 | 25 | 25 |
| Propylene-oxide / ethylene-oxide copolymer | 400 | 400 | 400 |
| 2,6-Di-tert-Butyl-1-Hydroxy-4-Methylbenzene | 10 | - | - |
| Expoxidised soybean oil | - | 10 | - |
| Mixture of heavy aromatic hydrocarbons | Balance up to 1 litre | Balance up to 1 litre | Balance up to 1 litre |
| | | | |
| Total | 1 litre | 1 litre | 1 litre |
| | | | |
| Loss in benzophenone O-[2,6-bis(4,6-dimethoxypyrimidin-2-yloxy)benzoyl]oxime (in %) | **2.6** | **36.2** | **22.4** |

Tables 1 and 2 show that surprisingly, the use benzophenone O-[2,6-bis(4,6-dimethoxypyrimidin-2-yloxy)benzoyl]oxime as stabilizer (EC 1) in comparison with (EC 2) which contains a typical stabilizer for agroformulations, or with (EC 3) which contains no stabilizer, leads to a very stable EC composition.

### Biological Examples

Benzophenone O-[2,6-bis(4,6-dimethoxypyrimidin-2-yloxy)benzoyl]oxime and 2-chloro-2',6'-diethyl-*N*-(2-propoxyethyl)acetanilide are usually applied in the form of an emulsion prepared with the emulsifiable concentrate (EC) according to the instant invention on the plants or on the locus thereof at an application rate of:
- 10 until 100 g/ha , preferably 20 to 70 g/ha for Benzophenone O-[2,6-bis(4,6-dimethoxypyrimidin-2-yloxy)benzoyl]oxime;
- 100 until 1000 g/ha, preferably 300 to 750 g/ha for 2-chloro-2',6'-diethyl-*N*-(2-propoxyethyl)acetanilide.

The use rate needed to have the desired effect can be determined by performing trials. It is dependent on the kind of effect, development stage of the cultivated plant and weeds, as well as of the application (place, time, procedure) and can, due to these parameters vary within a wide range.

The herbicidal effect of the emulsifiable concentrates (EC) according to invention is demonstrated in the following examples:

### Example B1 Herbicidal action after emergence of the plants (post-emergence herbicidal action)

Monocotyledonous and dicotyledonous test plants are sown in seed trays in standard soil. When the test plants are at the 2- to 3-leaf stage, the test compounds are applied by spraying in the form of an emulsion (prepared from the emulsifiable concentrate EC 1 in a concentration of 20 to 30 g / l for Benzophenone O-[2,6-bis(4.6-dimethoxypyrimidin-2-yloxy)benzoyl]oxime and of 300 to 450 g / l for 2-chloro-2',6'-diethyl-*N*-(2-propoxyethyl)acetanilide). Application rate was 200 to 600 l / ha, preferably 200 to 300 l / ha. The test plants are then grown on in a greenhouse under optimum conditions. After a 2- to 3-week test period, the test is evaluated (100 % = total damage to plant; 0 % = no damage to plant).

Emulsifiable concentrate 1 (EC 1) exhibits good results.

## Claims

1. An herbicidal composition in the form of an emulsifiable concentrate, which in addition to comprising emulsifiers, adjuvants and solvents, comprises
a) benzophenone O-[2,6-bis(4,6-dimethoxypyrimidin-2-yloxy)benzoyl]oxime,
b) 2-chloro-2',6'-diethyl-N (2-propoxyethyl)acetanilide, and
c) at least one steric hindered phenol.

2. The composition according to claim 1 wherein the steric hindered phenol is 2,6-Di-tert-Butyl-1-Hydroxy-4-Methylbenzene.

3. The composition according to either claim 1 or claim 2 wherein benzophenone O-[2,6-bis(4,6-dimethoxypyrimidin-2-yloxy)benzoyl]oxime is present in amount from 0.1 to 20 % w/v.

4. The composition according to any one of claims 1 to 3 wherein 2-chloro-2',6'-diethyl-*N*-(2-propoxyethyl)acetanilide is present in an amount from 5 to 70 % w/v.

5. The composition according to any one of claims 1 to 4 wherein the steric hindered phenol is present in an amount from 0.3 to 5 % w/v.

6. The composition according to any one of claims 1 to 5 further comprising at least one adjuvant.

7. The composition according to any one of claims 1 to 6 further comprising at least one emulsifier.

8. The composition according to any one of claims 1 to 7 further comprising at least one water insoluble solvent.

9. The composition according to any one of claims 1 to 8 further comprising at least one polar solvent.

10. A method of controlling undesired vegetation in crops of useful plants, which comprises allowing a herbicidally effective amount of an emulsion prepared with the composition according to any one of claims 1 to 9 to act where control is desired.

11. The method according to claim 10, wherein the crop of useful plants is rice.

12. Use of a steric hindered phenol for the stabilisation of benzophenone O-[2,6-bis(4,6-dimethoxypyrimidin-2-yloxy)benzoyl]oxime and 2-chloro-2',6'-diethyl-*N*-(2-propoxyethyl)acetanilide in an emulsifiable concentrate formulation.

13. The use according to claim 12 wherein the steric hindered phenol is 2,6-Di-tert-Butyl-1-Hydroxy-4-Methylbenzene.
